# EUROPÄISCHE PATENTANMELDUNG

(11) **EP 3 805 880 A1**
(43) Veröffentlichungstag der Anmeldung: **14.04.2021**
(21) Anmeldenummer: 20200659.9
(22) Anmeldetag: 08.10.2020
(51) Int. Cl.: G05B 19/406, B23Q 17/09

(54) **STEUERUNG FÜR EIN WERKZEUG UND EINE MIT DEM WERKZEUG KOMPATIBLE WERKZEUGMASCHINE SOWIE VERFAHREN ZUM BETREIBEN EINER STEUERUNG**

(30) Priorität: 08.10.2019 DE 102019126936
(71) Anmelder: Lisa Dräxlmaier GmbH, 84137 Vilsbiburg (DE)
(72) Erfinder: Esterbauer, Peter, 5282 Ranshofen (AT); Püschel, Stefan, 4982 Obernberg/Inn (AT); Peterlechner, Hermann, 5145 Neukirchen (AT); Greifeneder, Daniel, 4963 St. Peter am Hart (AT); Rainer, Liedtke, 5280 Braunau/Inn (AT)

(57) **Zusammenfassung**

Die Erfindung betrifft eine Steuerung (10) für ein Werkzeug (12) und eine mit dem Werkzeug (12) kompatiblen Werkzeugmaschine (14), umfassend einen ersten Steckverbinder (16) zum Verbinden der Steuerung (10) mit einer werkzeugseitigen Schnittstelle (18), mit der jeweilige Sensoren (20) des Werkzeugs (12) verbunden sind; einen zweiten Steckverbinder (22) zum Verbinden der Steuerung mit einer Schnittstelle (24) der Werkzeugmaschine (14); eine Datenverarbeitungseinrichtung (26), die dazu eingerichtet ist, mittels der Sensoren (20) bereitgestellte Sensorsignale über den ersten Steckverbinder (16) zu empfangen und basierend auf den empfangenen Sensorsignalen in Echtzeit eine Zustandsüberwachung durchzuführen; eine Steuereinrichtung (28), die dazu eingerichtet ist, in Abhängigkeit von der Zustandsüberwachung das Werkzeug (12) über den ersten Steckverbinder (16) anzusteuern und/oder die Werkzeugmaschine (14) über den zweiten Steckverbinder (22) anzusteuern. Die Erfindung betrifft des Weiteren ein Verfahren zum Betreiben einer Steuerung (10), die über ihre Steckverbinder (16, 22) mit einem Werkzeug (12) und einer mit dem Werkzeug (12) kompatiblen Werkzeugmaschine (14) verbunden ist.

## Beschreibung

### Technisches Gebiet

Die vorliegende Erfindung betrifft eine Steuerung für ein Werkzeug und eine mit dem Werkzeug kompatible Werkzeugmaschine sowie ein Verfahren zum Betreiben einer derartigen Steuerung.

### Stand der Technik

Üblicherweise wird eine gesamthafte Prozesssteuerung im Zuge einer Produktion komplett von einer Produktionsanlage, beispielsweise einer Werkzeugmaschine, ohne Rücksicht auf einen Zustand eines Betriebsmittels in Form eines Werkzeugs übernommen. Beispielsweise durch unsachgemäße Inbetriebnahme des als Betriebsmittel dienenden Werkzeugs oder durch Veränderungen am Zustand des Werkzeugs, zum Beispiel aufgrund von Verschleiß oder ähnlichem, kann es zu Qualitätsverlusten im Herstellprozess bis hin zu ungeplanten Stillständen und Schäden am betreffenden Werkzeug kommen.

### Beschreibung der Erfindung

Es ist daher die Aufgabe der vorliegenden Erfindung, eine Lösung bereitzustellen, mittels welcher ein besonders zuverlässiger Betrieb eines Werkzeugs und einer mit dem Werkzeug kompatiblen Werkzeugmaschine erzielt werden kann.

Diese Aufgabe wird durch eine Steuerung für ein Werkzeug und eine mit dem Werkzeug kompatible Werkzeugmaschine sowie durch ein Verfahren zum Betreiben einer derartigen Steuerung mit den Merkmalen der unabhängigen Ansprüche gelöst. Weitere mögliche Ausgestaltungen sind insbesondere in den abhängigen Ansprüchen angegeben.

Die erfindungsgemäße Steuerung für ein Werkzeug und eine mit dem Werkzeug kompatible Werkzeugmaschine umfasst einen ersten Steckverbinder zum Verbinden der Steuerung mit einer werkzeugseitigen Schnittstelle, mit der jeweilige Sensoren des Werkzeugs verbunden sind. Des Weiteren umfasst die Steuerung einen zweiten Steckverbinder zum Verbinden der Steuerung mit einer Schnittstelle der Werkzeugmaschine. Zudem umfasst die Steuerung eine Datenverarbeitungseinrichtung, die dazu eingerichtet ist, mittels der Sensoren bereitgestellte Sensorsignale über den ersten Steckverbinder zu empfangen und basierend auf den empfangenen Sensorsignalen in Echtzeit eine Zustandsüberwachung durchzuführen. Des Weiteren umfasst die Steuerung eine Steuereinrichtung, die dazu eingerichtet ist, in Abhängigkeit von der Zustandsüberwachung das Werkzeug über den ersten Steckverbinder anzusteuern und/oder die Werkzeugmaschine über den zweiten Steckverbinder anzusteuern. Die Steuerung ist also ein intelligentes Überwachungs- und Steuerungsmodul für Betriebsmittel.

Unter einer Werkzeugmaschine im Sinne der Erfindung sind umformende, zerspanende, abtragende, urformende, fügende und alle trennenden Maschinen zu verstehen. Die Steuerung kann insbesondere als eine Art Box ausgebildet sein, welche am betreffenden Werkzeug angebracht, fixiert und angeschlossen werden kann. Über den ersten Steckverbinder kann die Steuerung mit der besagten werkzeugseitigen Schnittstelle verbunden werden, an der jeweilige Sensoren des Werkzeugs die Sensorsignale bereitstellen können.

Die Datenverarbeitungseinrichtung ist signaltechnisch mit dem ersten Steckverbinder verbunden, sodass die Datenverarbeitungseinrichtung mittels der Sensoren bereitgestellte Sensorsignale über den ersten Steckverbinder abgreifen kann. Die Datenverarbeitungseinrichtung kann basierend auf den empfangenen Sensorsignalen in Echtzeit eine Zustandsüberwachung vom Werkzeug durchführen. Über den zweiten Steckverbinder kann die Steuerung mit der Schnittstelle der Werkzeugmaschine verbunden werden. Im betriebsbereiten Zustand kann das Werkzeug als Bestandteil der Werkzeugmaschine an dieser montiert sein.

Der zweite Steckverbinder kann beispielsweise unter Vermittlung eines Kabels mit der Schnittstelle der Werkzeugmaschine verbunden sein. Alternativ ist es auch möglich, dass der zweite Steckverbinder direkt an einer als Steckverbinder ausgebildeten Schnittstelle der Werkzeugmaschine angeschlossen wird. Die Sensoren des Werkzeugs können Analogsignale und/oder Digitalsignale bereitstellen. Über die im Werkzeug verbauten Sensoren ist es möglich, verschiedenste Funktionen, Werte, Zustände, Temperaturen, Drücke, Durchflüsse, Vibrationen, Geräusche und dergleichen zu erfassen. Der Datenverarbeitungseinrichtung können also unterschiedlichste Sensorsignale bereitgestellt werden, welche den Zustand des betreffenden Werkzeugs charakterisieren und/oder mit einem mittels des Werkzeugs durchgeführten Bearbeitungsprozess korrespondieren. Die Steuereinrichtung ist dazu eingerichtet, in Abhängigkeit von der Zustandsüberwachung das Werkzeug anzusteuern und/oder die Werkzeugmaschine über den zweiten Steckverbinder anzusteuern.

Die Steuerung kann also sowohl mit dem Werkzeug als auch mit der mit dem Werkzeug kompatiblen Werkzeugmaschine signaltechnisch verbunden werden. Auf der Datenverarbeitungseinrichtung kann eine Software aufgespielt sein, welche ermöglicht, die mittels der Sensoren bereitgestellten Sensorsignale nach einem vorgegebenen Muster beziehungsweise Programm in Echtzeit auszuwerten und so die Zustandsüberwachung durchzuführen.

Mittels der Steuereinrichtung der Steuerung ist es unter Berücksichtigung der insbesondere permanenten Zustandsüberwachung möglich, sowohl das Werkzeug als auch die Werkzeugmaschine anzusteuern. Zudem ist es möglich, unterschiedlichste Programme zur Zustandsüberwachung auf die Steuerung beziehungsweise die Datenverarbeitungseinrichtung aufzuspielen. Je nach verwendetem Werkzeug und verwendeter Werkzeugmaschine können somit passgenaue Programme bereitgestellt werden, sodass die Datenverarbeitungseinrichtung die jeweils bereitgestellten Sensorsignale angepasst an das jeweilige Werkzeug und die jeweilige Werkzeugmaschine verarbeiten und auswerten kann, um besagte Zustandsüberwachung durchzuführen. Je nachdem, was für Funktionen benötigt werden, können diese problemlos erweitert und auf der Steuerung umgesetzt werden.

Mittels der erfindungsgemäßen Steuerung ist es möglich, beispielsweise Echtzeitabfragen zu ermöglichen, sodass jederzeit Informationen über den Zustand des als Betriebsmittel dienenden Werkzeugs zur Verfügung gestellt werden können. Bei erforderlichen Wartungs- beziehungsweise Reparaturarbeiten können mittels der Steuerung auch unterschiedlichste Auswertungsmöglichkeiten bereitgestellt werden. Die Steuerung kann auch für ein sogenanntes Predictive Maintenance, also eine Prädiktive Instandhaltung, eingesetzt werden, da Veränderungen in Prozessen, beispielsweise in Form von Vibrationen, Geräuschen und dergleichen, in Echtzeit erkannt und ausgewertet werden können.

Unter Verwendung der Steuerung ist es auch möglich, Daten, insbesondere im Zusammenhang mit der Zustandsüberwachung, zum Beispiel bei Wartungen auszulesen und dadurch gezielte Maßnahmen vorzunehmen. Fehlbedienungen oder dergleichen können im Nachgang beim Einsatz der Steuerung erkannt und analysiert werden. Zudem ist es auch mittels der Steuerung möglich, verschiedenste Betriebsmitteldaten des Werkzeugs unabhängig von einem Produktionsstandort zu erfassen, auszuwerten und zu analysieren. So ist es beispielsweise auch möglich, über die Steuerung eine Unterstützung für lokale Serviceeinheiten bereitzustellen. Auch ist es möglich, mehrere der erfindungsgemäßen Steuerungen an unterschiedlichen Werkzeugen und Werkzeugmaschinen einzusetzen, wobei die Steuerungen untereinander kommunizieren können.

Eine mögliche Ausgestaltung der Erfindung sieht vor, dass die Datenverarbeitungseinrichtung dazu eingerichtet ist, als Bestandteil der Zustandsüberwachung jeweilige mittels des Werkzeugs durchgeführte Bearbeitungsprozesse zu überwachen. So ist es mittels der Steuerung möglich, fortlaufend beziehungsweise permanent einen unter Zuhilfenahme des Werkzeugs durchgeführten Herstellprozess zu überwachen. Verschiedenste Betriebsparameter des Werkzeugs beziehungsweise auch der Werkzeugmaschine können im Zuge der Zustandsüberwachung also mittels der Datenverarbeitungseinrichtung überwacht und ausgewertet werden. So ist es mittels der Steuereinrichtung der Steuerung möglich, in Abhängigkeit von der Überwachung jeweiliger Bearbeitungsprozesse das betreffende Werkzeug und/oder die betreffende Werkzeugmaschine passgenau anzusteuern, indem beispielsweise Betriebsparameter oder dergleichen fortlaufend angepasst werden, um immer eine besonders hohe Qualität während des Herstellprozesses sicherstellen zu können.

Gemäß einer weiteren möglichen Ausgestaltung der Erfindung ist es vorgesehen, dass die Datenverarbeitungseinrichtung dazu eingerichtet ist, als Bestandteil der Zustandsüberwachung einen Verschleiß des Werkzeugs zu überwachen. Mittels der im beziehungsweise am Werkzeug verbauten Sensoren ist es möglich, verschiedenste Messgrößen bereitzustellen, um so den Verschleiß des Werkzeugs zu überwachen. Diese Messgrößen in Form der besagten Sensorsignale können wiederum der Datenverarbeitungseinrichtung der Steuerung bereitgestellt werden, die basierend darauf einen Verschleiß des Werkzeugs permanent und fortlaufend überwachen kann. Die Steuereinrichtung der Steuerung kann wiederum in Abhängigkeit vom Verschleiß des Werkzeugs, das Werkzeug und/oder die Werkzeugmaschine passend anzusteuern, um beispielsweise einen Verschleiß am Werkzeug auszugleichen und darüber eine konstant hohe Fertigungsqualität sicherstellen.

In weiterer möglicher Ausgestaltung der Erfindung ist es vorgesehen, dass die Steckverbinder jeweils eine standardisierte Verkabelung aufweisen. Die Steckverbinder können also an der Steuerung immer fertig vormontiert und immer gleich verkabelt ausgebildet sein. Anders ausgedrückt kann es sich bei den Steckverbindern also um standardisierte Steckverbinder handeln, sodass die Steuerung nur jeweils eine Variante des ersten und zweiten Steckverbinders aufweist. Die Steckverbinder können insbesondere für unterschiedliche Varianten von Werkzeugen und Werkzeugmaschinen kompatibel ausgebildet sein.

Eine weitere mögliche Ausgestaltung der Erfindung sieht vor, dass die Steuerung plug-and-play-fähig ausgelegt ist. Die Steuerung kann also insbesondere erkennen, an was für einem Werkzeug und an was für einer Werkzeugmaschine sie angeschlossen ist, wobei die Steuerung dazu ausgelegt ist, ohne beispielsweise das Erfordernis der Installation von Gerätetreibern oder dergleichen, direkt mit dem betreffenden Werkzeug und der Werkzeugmaschine zu kommunizieren und Daten auszutauschen.

Eine weitere mögliche Ausgestaltung der Erfindung sieht vor, dass die Steuerung einen Datenspeicher zum Speichern der Sensorsignale und/oder Daten der Zustandsüberwachung aufweist. Die Steuerung kann also als eine Art Blackbox fungieren. Sämtliche erfassten Sensorsignale und/oder Daten der Zustandsüberwachung können so nachträglich jederzeit bereitgestellt und ausgelesen werden. Verschiedenste Analysen hinsichtlich der Verwendung des betreffenden Werkzeugs und der verwendeten Werkzeugmaschine können so auf einfache Weise nachträglich ausgelesen und analysiert werden.

In weiterer möglicher Ausgestaltung der Erfindung ist es vorgesehen, dass die Steuereinrichtung dazu eingerichtet ist, in Abhängigkeit von an einem jeweiligen Ergebnis der Zustandsüberwachung eine Meldung an einen Bediener auszugeben, Parameter am Werkzeug und/oder der Werkzeugmaschine zu verändern, und/oder einen Herstellprozess mittels des Werkzeugs und/oder der Werkzeugmaschine zu stoppen. Verschiedenste Informationen im Zusammenhang mit der Zustandsüberwachung können also an einen Bediener ausgegeben werden. Derartige Meldungen können beispielsweise am Werkzeug, der Werkzeugmaschine und/oder auch an einer entfernt gelegenen Benutzerschnittstelle ausgegeben werden. Zudem kann die Steuereinrichtung in Abhängigkeit von der Zustandsüberwachung verschiedenste Parameter am Werkzeug und/oder der Werkzeugmaschine verändern, um für einen zuverlässigen Herstellprozess zu sorgen. Sollte die Steuereinrichtung anhand der in Echtzeit durchgeführten Zustandsüberwachung gewisse Probleme feststellen, so kann diese gegebenenfalls auch einen Herstellprozess stoppen, der mittels des Werkzeugs beziehungsweise der Werkzeugmaschine durchgeführt wird. So können Schäden insbesondere am Werkzeug und der Werkzeugmaschine zuverlässig verhindert werden. Auch kann die Steuerungseinrichtung beispielsweise über besagte Meldung an den Bediener einen Wartungsbedarf am Werkzeug und/oder der Werkzeugmaschine kenntlich machen. Grundsätzlich ist es möglich, dass die Steuereinrichtung verschiedenste Informationen auf Basis der Zustandsüberwachung bereitstellen und an unterschiedlichsten Stellen auch fernab des Werkzeugs und der Werkzeugmaschine bereitstellen kann.

Eine weitere mögliche Ausgestaltung der Erfindung sieht vor, dass die Steuerung ein staub-, stoß-, wasser- und/oder temperaturgeschütztes Gehäuse aufweist. So sind die empfindlichen Komponenten der Steuerung vor äußeren Einflüssen zuverlässig geschützt. Die besagten Steckverbinder der Steuerung können in das Gehäuse integriert sein. Die Steckverbinder können entsprechend selbst staub-, stoß-, wasser- und/oder temperaturgeschützt ausgebildet sein. Die Steuerung ist durch besagtes Gehäuse besonders robust und wenig steueranfällig ausgebildet und kann auch unter rauen Produktionsbedingungen eingesetzt werden.

Gemäß einer weiteren möglichen Ausgestaltung der Erfindung ist es vorgesehen, dass die Steuerung ein Kommunikationsmodul aufweist, welches dazu ausgelegt ist, die Sensorsignale und/oder Daten der Zustandsüberwachung drahtlos zu versenden. So ist es über das Kommunikationsmodul beispielsweise möglich, unter Nutzung eines Netzwerks oder auch eines Mobilfunknetzes oder anderweitigen Netzwerken verschiedenste Informationen beziehungsweise Daten zu versenden. Die Steuerung kann so beispielsweise insbesondere die Zustandsüberwachung betreffende Informationen beziehungsweise Daten auch an ein übergeordnetes Produktionssteuerungssystem übertragen. Die Steuerung kann über das Kommunikationsmodul insbesondere im Sinne des Industrie-4.0-Gedankens verschiedenste Daten an unterschiedlichsten Orten bereitstellen. So können insbesondere Betriebsmitteldaten hinsichtlich des Werkzeugs unabhängig vom Produktionsstandort erfasst, ausgewertet und analysiert werden.

Bei dem erfindungsgemäßen Verfahren zum Betreiben der erfindungsgemäßen Steuerung oder einer möglichen Ausgestaltung der erfindungsgemäßen Steuerung, welche über ihre Steckverbinder mit einem Werkzeug und einer mit dem Werkzeug kompatiblen Werkzeugmaschine verbunden ist, empfängt die Datenverarbeitungseinrichtung der Steuerung mittels jeweiliger Sensoren des Werkzeugs bereitgestellte Sensorsignale über den ersten Steckverbinder und führt basierend auf den empfangenen Sensorsignalen eine Zustandsüberwachung in Echtzeit durch. Die Steuereinrichtung der Steuerung steuert in Abhängigkeit von der Zustandsüberwachung das Werkzeug über den ersten Steckverbinder und/oder die Werkzeugmaschine über den zweiten Steckverbinder an. Mögliche Ausgestaltungen und Vorteile der Steuerung sind als mögliche Ausgestaltungen und Vorteile des Verfahrens und umgekehrt anzusehen, wobei die Steuerung insbesondere Mittel zur Durchführung der Verfahrensschritte aufweist.

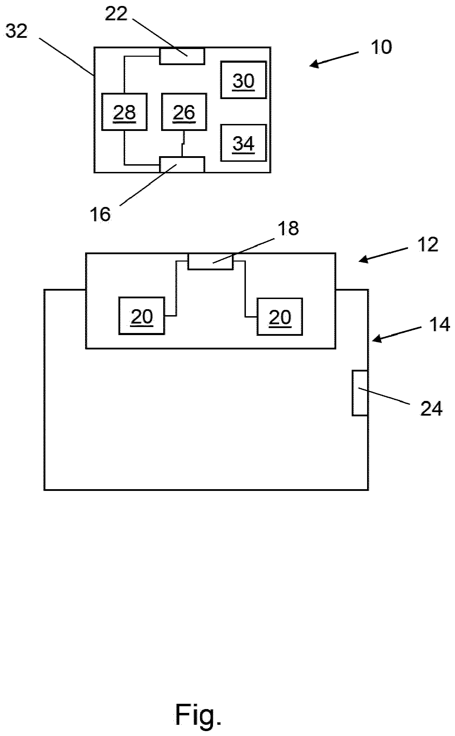

Weitere Vorteile, Merkmale und Einzelheiten der Erfindung können sich aus der nachfolgenden Beschreibung möglicher Ausführungsbeispiele sowie anhand der Zeichnung ergeben. Die vorstehend in der Beschreibung genannten Merkmale und Merkmalskombinationen sowie die nachfolgend in der Figurenbeschreibung und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

### Kurze Figurenbeschreibung

Die Zeichnung zeigt in der einzigen Figur eine stark schematisierte Darstellung einer Werkzeugmaschine mit einem Werkzeug sowie eine Steuerung.

Eine Steuerung 10 für ein Werkzeug 12 und eine mit dem Werkzeug 12 kompatible Werkzeugmaschine 14 ist in einer stark schematisierten Darstellung in der einzigen Figur gezeigt. Bei dem Werkzeug 12 kann es sich im Prinzip um beliebige Arten von Werkzeugen handeln, wobei es sich bei der Werkzeugmaschine 14 auch um beliebige Arten von Werkzeugmaschinen handeln kann. So kann es sich bei der Werkzeugmaschine 14 beispielsweise um eine Spritzgussmaschine handeln, wobei es sich bei dem Werkzeug 12 in dem Fall um ein Spritzgusswerkzeug handeln kann. Bei der Werkzeugmaschine 14 kann es sich beispielsweise auch um eine Stanzbiegemaschine handeln, wobei das Werkzeug 12 dann ein entsprechendes Werkzeug 12 der Stanzbiegemaschine ist. Bei der Werkzeugmaschine 14 kann es sich um eine umformende, zerspanende, abtragende, urformende, fügende und/oder trennende Maschine handeln, wobei es sich bei dem Werkzeug 12 um ein entsprechendes Werkzeug bzw. Betriebsmittel handelt kann, welches zur entsprechenden Werkzeugmaschine 12 kompatibel ist und umgekehrt.

Die Steuerung 10 umfasst einen ersten Steckverbinder 16 zum Verbinden der Steuerung 10 mit einer werkzeugseitigen Schnittstelle 18, mit der jeweilige Sensoren 20 des Werkzeugs 12 verbunden sind. Des Weiteren umfasst die Steuerung 10 einen zweiten Steckverbinder 22 zum Verbinden der Steuerung 10 mit einer Schnittstelle 24 der Werkzeugmaschine 14. Des Weiteren weist die Steuerung 10 eine Datenverarbeitungseinrichtung 26 auf, die dazu eingerichtet ist, mittels der Sensoren 20 bereitgestellte Sensorsignale über den ersten Steckverbinder 16 zu empfangen und basierend auf den empfangenen Sensorsignalen in Echtzeit eine Zustandsüberwachung durchzuführen. Eine Steuereinrichtung 28 der Steuerung 10 ist dazu eingerichtet, in Abhängigkeit von der Zustandsüberwachung das Werkzeug 12 über den ersten Steckverbinder 16 und/oder die Werkzeugmaschine 14 über den zweiten Steckverbinder 22 anzusteuern.

Mittels der Sensoren 20 können je nach Art der Werkzeugmaschine 12 verschiedenste Größen und Betriebsparameter erfasst und dadurch überwacht werden. So können beispielsweise Temperaturen, Drücke, Durchflüsse, Vibrationen, Geräusche und dergleichen mittels der Sensoren 20 erfasst und in Form der besagten Sensorsignale der Datenverarbeitungseinrichtung 26 bereitgestellt werden.

Die Datenverarbeitungseinrichtung 26 kann als Bestandteil der Zustandsüberwachung insbesondere jeweilige mittels des Werkzeugs 12 durchgeführte Bearbeitungsprozesse überwachen. Mittels der Steuerung 10 ist es also möglich, unterschiedlichste Fertigungsprozesse zu überwachen, die mittels des Werkzeugs 12 und der Werkzeugmaschine 14 durchgeführt werden. Darüber hinaus kann die Datenverarbeitungseinrichtung 26 als Bestandteil der Zustandsüberwachung auch einen Verschleiß des Werkzeugs 12 überwachen.

Die Steckverbinder 16, 22 sind als standardisierte Stecker ausgebildet und weisen eine entsprechend standardisierte Verkabelung auf. Die Steuerung 10 ist insbesondere plug-and-play-fähig ausgelegt. Darüber hinaus weist die Steuerung 10 einen Datenspeicher 30 zum Speichern der Sensorsignale und/oder der Daten der Zustandsüberwachung auf. Die Steuerung 10 kann also als eine Art Blackbox fungieren, sodass verschiedenste Daten zuverlässig gespeichert und bei Bedarf bereitgestellt werden können.

Die Steuereinrichtung 28 kann in Abhängigkeit von einem jeweiligen Ergebnis der Zustandsüberwachung beispielsweise eine Meldung an einen hier nicht dargestellten Bediener ausgeben, z.B. an einen Computer, ein Smartphone oder dergleichen. So können beispielsweise Informationen über einen Herstellprozess oder auch zum Beispiel Warnmeldungen, Informationen über einen Wartungsbedarf und dergleichen an den besagten Bediener ausgegeben werden. Die Steuereinrichtung 28 kann in Abhängigkeit von der Zustandsüberwachung auch verschiedenste Parameter am Werkzeug 12 und/oder der Werkzeugmaschine 14 verändern und so anpassen, dass ein möglichst reibungsloser Produktionsablauf gewährleistet werden kann. Bei Bedarf kann die Steuereinrichtung 28 auch einen Herstellprozess, der mittels des Werkzeugs 12 und/oder der Werkzeugmaschine 14 gerade durchgeführt wird, stoppen. So kann vermieden werden, dass kostenintensive Schäden am Werkzeug 12 beziehungsweise der Werkezugmaschine 14 entstehen.

Die Steuerung 10 ist in einem staub-, stoß,- wasser- und/oder temperaturgeschützten Gehäuse 32 untergebracht. Sämtliche Komponenten der Steuerung 10 sind also durch das betreffende Gehäuse 32 gut geschützt und können auch unter rausten Produktionsbedingungen problemlos und dauerhaft zuverlässig eingesetzt werden. Des Weiteren weist die Steuerung 10 ein Kommunikationsmodul 34 auf, über welches insbesondere die Sensorsignale und/oder Daten der Zustandsüberwachung drahtlos versendet werden können. So ist es beispielsweise möglich, über das Kommunikationsmodul 34 verschiedenste Informationen beziehungsweise Daten betreffend das Werkzeug 12 und/oder die Werkzeugmaschine 14 an verschiedenste Endgeräte zu versenden. Das Kommunikationsmodul 34 kann die Daten beispielsweise über WLAN, ein Mobilfunknetz und auch über beliebige andere drahtlose Kommunikationstechnologien versenden. So ist es beispielsweise möglich, dass über das Kommunikationsmodul 34 verschiedenste Daten betreffend die Zustandsüberwachung und/oder die Sensorsignale an ein übergeordnetes Produktionssteuerungssystem übertragen werden. Insbesondere wenn mehrere solcher Werkezuge 12 und Werkzeugmaschinen 14 mit derartigen Steuerungen 10 ausgerüstet werden, ist es möglich, dass die verschiedenen Produktionsmittel auf diese Weise miteinander kommunizieren können, wobei zum Beispiel ein übergeordnetes Produktionssteuerungssystem in Kenntnis der verschiedensten Daten Herstellprozesse beziehungsweise Produktionsabläufe bei den verschiedenen Werkzeugmaschinen 14 beziehungsweise Werkzeugen 12 koordinieren kann.

Mittels der Steuerung 10 ist es also möglich, verschiedenste Funktionen, Werte, Zustände, Temperaturen, Drücke, Durchflüsse und dergleichen beim als Betriebsmittel dienenden Werkzeug 12 zu erfassen und insbesondere nach einem programmierten Muster in Echtzeit auszuwerten. Auf Basis dieser Auswertung können über die als Schnittstellen dienenden Steckverbinder 16, 22 beispielsweise automatisierte Parameteränderungen vorgenommen werden, wobei beim Auftauchen von Problemen auch ein Produktionsstopp vorgenommen werden kann, bevor insbesondere ein Schaden am Werkzeug 12 entsteht. Fehlfunktionen können mittels der Steuerung 10 sofort erkannt werden, sodass Beschädigungen am Werkzeug 12 und/oder der Werkzeugmaschine 14 vermieden werden können.

Verschiedenste Auswertemöglichkeiten, Überwachungsmöglichkeiten und dergleichen können bei Bedarf ganz einfach bei der Steuerung 10 nachgerüstet werden. Notwendige Programme, die auf die Steuerung 10 aufgespielt werden sollen, können beispielsweise einfach auf einem Notebook programmiert und auf die Steuerung 10 übertragen werden. Werden weitere Funktionen benötigt, stehen so gut wie unbegrenzte Erweiterungsmöglichkeiten zur Verfügung, indem die Steuerung 10 entsprechend angepasst wird, die Sensoren 20 entsprechend ausgewählt werden, Programme zur Zustandsüberwachung angepasst werden und dergleichen.

### BEZUGSZEICHENLISTE

- 10: Steuerung
- 12: Werkzeug
- 14: Werkzeugmaschine
- 16: erster Steckverbinder
- 18: werkzeugseitige Schnittstelle
- 20: Sensoren
- 22: zweiter Steckverbinder
- 24: Schnittstelle der Werkzeugmaschine
- 26: Datenverarbeitungseinrichtung
- 28: Steuereinrichtung
- 30: Datenspeicher
- 32: Gehäuse
- 34: Kommunikationsmodul

## Patentansprüche

1. Steuerung (10) für ein Werkzeug (12) und eine mit dem Werkzeug (12) kompatible Werkzeugmaschine (14), umfassend
- einen ersten Steckverbinder (16) zum Verbinden der Steuerung (10) mit einer werkzeugseitigen Schnittstelle (18), mit der jeweilige Sensoren (20) des Werkzeugs (12) verbunden sind;
- einen zweiten Steckverbinder (22) zum Verbinden der Steuerung mit einer Schnittstelle (24) der Werkzeugmaschine (14);
- eine Datenverarbeitungseinrichtung (26), die dazu eingerichtet ist, mittels der Sensoren (20) bereitgestellte Sensorsignale über den ersten Steckverbinder (16) zu empfangen und basierend auf den empfangenen Sensorsignalen in Echtzeit eine Zustandsüberwachung durchzuführen;
- eine Steuereinrichtung (28), die dazu eingerichtet ist, in Abhängigkeit von der Zustandsüberwachung das Werkzeug (12) über den ersten Steckverbinder (16) anzusteuern und/oder die Werkzeugmaschine (14) über den zweiten Steckverbinder (22) anzusteuern.

2. Steuerung (10) nach Anspruch 1,
**dadurch gekennzeichnet, dass**
die Datenverarbeitungseinrichtung (26) dazu eingerichtet ist, als Bestandteil der Zustandsüberwachung jeweilige mittels des Werkzeugs (12) durchgeführte Bearbeitungsprozesse zu überwachen.

3. Steuerung (10) nach Anspruch 1 oder 2,
**dadurch gekennzeichnet, dass**
die Datenverarbeitungseinrichtung (26) dazu eingerichtet ist, als Bestandteil der Zustandsüberwachung einen Verschleiß des Werkzeugs (12) zu überwachen.

4. Steuerung (10) nach einem der vorhergehenden Ansprüche,
**dadurch gekennzeichnet, dass**
die Steckverbinder (16, 22) jeweils eine standardisierte Verkabelung aufweisen.

5. Steuerung (10) nach einem der vorhergehenden Ansprüche,
**dadurch gekennzeichnet, dass**
die Steuerung (10) plug-and-play-fähig ausgelegt ist.

6. Steuerung (10) nach einem der vorhergehenden Ansprüche,
**dadurch gekennzeichnet, dass**
die Steuerung (10) einen Datenspeicher (30) zum Speichern der Sensorsignale und/oder Daten der Zustandsüberwachung aufweist.

7. Steuerung (10) nach einem der vorhergehenden Ansprüche,
**dadurch gekennzeichnet, dass**
die Steuereinrichtung (28), die dazu eingerichtet ist, in Abhängigkeit von einem jeweiligen Ergebnis der Zustandsüberwachung
- eine Meldung an einen Bediener auszugeben;
- Parameter am Werkzeug (12) und/oder der Werkzeugmaschine (14) zu verändern;
- einen Herstellprozess mittels des Werkzeugs (12) und/oder der Werkzeugmaschine (14) zu stoppen.

8. Steuerung (10) nach einem der vorhergehenden Ansprüche,
**dadurch gekennzeichnet, dass**
die Steuerung (10) ein staub-, stoß-, wasser- und/oder temperaturgeschütztes Gehäuse (32) aufweist.

9. Steuerung (10) nach einem der vorhergehenden Ansprüche,
**dadurch gekennzeichnet, dass**
die Steuerung (10) ein Kommunikationsmodul (34) aufweist, welches dazu ausgelegt ist, die Sensorsignale und/oder Daten der Zustandsüberwachung drahtlos zu versenden.

10. Verfahren zum Betreiben einer Steuerung (10) nach einem der vorhergehenden Ansprüche, welche über ihre Steckverbinder (16, 22) mit einem Werkzeug (12) und einer mit dem Werkzeug (12) kompatiblen Werkzeugmaschine (14) verbunden ist, wobei
- die Datenverarbeitungseinrichtung (26) der Steuerung (10) mittels jeweiliger Sensoren (20) des Werkzeugs (12) bereitgestellte Sensorsignale über den ersten Steckverbinder (16) empfängt und basierend auf den empfangenen Sensorsignalen eine Zustandsüberwachung in Echtzeit durchführt;
- die Steuereinrichtung (28) der Steuerung (10) in Abhängigkeit von der Zustandsüberwachung das Werkzeug (12) über den ersten Steckverbinder (16) ansteuert und/oder die Werkzeugmaschine (14) über den zweiten Steckverbinder (22) ansteuert.
